# EUROPÄISCHE PATENTSCHRIFT

(11) **EP 3 151 995 B1**
(45) Veröffentlichungstag und Bekanntmachung des Hinweises auf die Patenterteilung: **20.03.2019**
(21) Anmeldenummer: 15724581.2
(22) Anmeldetag: 15.05.2015
(51) Int. Cl.: B23K 20/10, B23K 20/233, B29C 65/78, B29C 65/00, H01M 2/22, H01M 2/26

(54) **VERFAHREN ZUM BEFESTIGEN VON ABLEITERN AN EINER ELEKTRODENANORDNUNG BEIM HERSTELLEN EINER ENERGIESPEICHERZELLE**
METHOD OF FASTENING CONDUCTORS TO AN ELECTRODES-ARRANGEMENT IN THE PRODUCTION OF AN ENERGY STORAGE CELL
PROCÉDÉ DE FIXATION DE CONDUCTEURS SUR UN ENSEMBLE D'ÉLECTRODES LORS DE LA PRODUCTION D'UNE CELLULE D'ACCUMULATION D'ÉNERGIE

(30) Priorität: 03.06.2014 DE 102014210425
(43) Veröffentlichungstag der Anmeldung: 12.04.2017
(73) Patentinhaber: ThyssenKrupp System Engineering GmbH, 74076 Heilbronn (DE); thyssenkrupp AG, 45143 Essen (DE)
(72) Erfinder: ECHELMEYER, Thomas, 09113 Chemnitz (DE); KRAMER, Marcel, 01445 Radebeul (DE); EBERT, Lars, 09127 Chemnitz (DE); GERHARDT, Rainer, 09130 Chemnitz (DE)
(74) Vertreter: thyssenkrupp Intellectual Property GmbH
(86) Internationale Anmeldenummer: PCT/EP2015/060750
(87) Internationale Veröffentlichungsnummer: WO 2015/185344

(56) Entgegenhaltungen:
- CN-U- 202 984 909
- US-A- 5 598 964
- US-A1- 2012 308 855

## Beschreibung

### Stand der Technik

Die vorliegende Erfindung betrifft ein Verfahren zum Befestigen von Ableitern an einer Elektrodenanordnung gemäß dem Oberbegriff des Anspruchs 1 (siehe z. B., CN 202 984 909 U).

Als allgemeiner Stand der Technik, bei dem in einem Verfahren ein Deckel eines Batteriecontainers mit den Ableitern, die ihrerseits mit den Elektroden verbunden ist, verbunden werden, ist die US 20120308855 A1 zu nennen. Bei der Fertigung von Energiespeichern, wie beispielsweise Batterien, insbesondere Lithium-Ionen-Akkus, Supercaps oder Ähnlichem, werden an Primärbauteilanordnungen Sekundärbauteile, vorzugsweise Ableiterbleche, Befüllstutzen, Sensoren, Kurzschlusssicherung oder Gehäuseteile, befestigt, über die der Energiespeicher beispielsweise im Falle der Ableiter mit einem übergeordneten System verbunden und insbesondere ge- und entladen werden kann. Typischerweise erfolgt die Befestigung meist über einen Schweißprozess. Dabei ist eine konstante Anordnung der Sekundärbauteil zueinander und zur Primärbauteilanordnung für die weitere Verarbeitung von entscheidender Bedeutung. Das gilt insbesondere für Pouchzellen. Ein weiterer Faktor für die Qualität der gefertigten Energiespeicherzelle ist die sichere Verbindung der einzelnen Sekundärbauteile mit der Primärbauteilanordnung. Hierzu sind reproduzierbare Bedingungen, wie beispielsweise eine gleichbleibende Anordnung während des Befestigungsvorgangs, entscheidend.

Zur Sicherstellung der gewünschten zeitlich und räumlich konstanten Anordnung kennt der Stand der Technik aufwendige Positionierungssysteme für die Sekundärbauteile.

### Offenbarung der Erfindung

Es ist Aufgabe der vorliegenden Erfindung ein Verfahren zur Verfügung zu stellen, mit dem die Verbindung zwischen den einzelnen Sekundärbauteilen und der Primärbauteilanordnung bei der Herstellung der Energiespeicherzelle reproduzierbarer wird, ohne dabei aufwendige Positionierungssysteme verwenden zu müssen.

Ein Verfahren zum Befestigen von Ableitern an einer Elektrodenanordnung gemäß der Erfindung ist im Anspruch 1 definiert. Gegenüber dem Stand der Technik hat das erfindungsgemäße Verfahren den Vorteil, die Sekundärbauteil bereits zeitlich vor der Verbindung mit der Primärbauteilanordnung geometrisch zu fixieren und damit in der gewünschten Sekundärbauteilanordnung zueinander anzuordnen. Der Sekundärbauteilpositionierer ersetzt demnach in vorteilhafte Weise aufwendig ausgestaltete Positionierungssysteme und ermöglicht es dabei zudem in vorteilhafter Weise, dass beispielsweise alle zu befestigenden Sekundärbauteile simultan an die Primärbauteilanordnung geführt werden können.

Gemäß der Erfindung werden als Primärbauteil Elektroden und als Sekundärbauteile Ableiter verwendet. Insbesondere ist es vorgesehen, dass eine stoffschlüssige Verbindung realisiert wird, deren Dauerhaftigkeit auf die Lebensdauer eines Energiespeichers, in den die Primärbauteilanordnung mit den befestigten Sekundärbauteilen integriert werden soll, ausgelegt ist. Beispielsweise handelt es sich bei dem Energiespeicher um eine Batterie, insbesondere um einen Lithium-Ionen-Akku, einen Supercap oder besonders bevorzugt um eine Pouchzelle. Insbesondere wird die Sekundärbauteilanordnung, beispielsweise Ableiteranordnung, über die jeweiligen Sekundärbauteile, beispielsweise Ableiter, mit der Primärbauteilanordnung, beispielsweise Elektrodenanordnung, verbunden.

Vorteilhafte Ausgestaltungen und Weiterbildungen der Erfindung sind den Unteransprüchen, sowie der Beschreibung unter Bezugnahme auf die Zeichnungen entnehmbar.

Gemäß der Erfindung ist es vorgesehen, dass die Ableiter im ersten Verfahrensschritt lösbar am Ableiterpositionierer angebracht werden.

Durch das Anbringen der Ableiter am Ableiterpositionierer werden die Sekundärbauteile im Vorfeld des eigentlichen Verbindens ausgerichtet und fixiert. Insbesondere ist es vorgesehen, dass der Sekundärbauteilpositionierer Aussparungen aufweist, die für die Aufnahme des jeweiligen Sekundärbauteils vorgesehen sind. Vorzugsweise werden die Sekundärbauteile im ersten Verfahrensschritt in jeweils passgenaue Aussparungen im Sekundärbauteilpositionierer eingelassen. Da gemäß der Erfindung die Sekundärbauteile lösbar am Sekundärbauteil angebracht sind, lässt sich der Ableiterpositionierer nach dem Verbinden mit der Primärbauteilanordnung wieder von den Ableitern abziehen und erneut nutzen. Insbesondere ist es vorgesehen, dass die Ableiter derart am Ableiterpositionierer angebracht sind, dass der Ableiterpositionierer Folgeprozesse, wie beispielsweise das Verbinden der Primärbauteilanordnung mit der Sekundärbauteilanordnung, nicht behindert. Vorzugsweise ist es dazu vorgesehen, dass ein Sekundärbauteilpositionierer verwendet wird, der einen Verbindungbereich, indem die Primärbauteilanordnung mit dem Sekundärbauteil verbunden wird, offen bzw. frei zugänglich hält. Beispielsweise lässt der Sekundärbauteilpositionierer genügend Platz für eine Vorrichtung, mit der die in Rede stehende Verbindung erzielt werden soll.

Es ist dabei weiterhin vorgesehen, dass in einem dritten Verfahrensschritt die Sekundärbauteilanordnung für das Verbinden im zweiten Verfahrensschritt relativ zur Primärbauteilanordnung positionsfest angeordnet wird. Insbesondere ist es vorgesehen, dass die Sekundärbauteilanordnung und die Primärbauteilanordnung reproduzierbar in derselben relativen Position zueinander anordbar sind bzw. fixiert werden. Dadurch lässt sich nicht nur sicherstellen, dass die jeweiligen Sekundärbauteil, insbesondere Ableiter, an den jeweils für sie vorgesehenen Primärbauteilen, insbesondere Elektroden anliegen, sondern die reproduzierbare Anordnung wirkt sich auch positiv auf die Qualität der im zweiten Verfahrensschritt erfolgenden Verbindung aus. Insbesondere in Fertigungsanlagen ergibt sich der Vorteil, dass der Verbindungsprozess für eine bestimmte relative Anordnung zwischen dem Sekundärbauteil und der Primärbauteilanordnung optimiert werden kann. Wäre die relative Anordnung zwischen Sekundärbauteil und Primärbauteilanordnung nicht reproduzierbar, könnte ein Versatz zwischen den beiden Bauteilen zu einer Qualitätsminderung der Verbindung führen.

In einer weiteren Ausführungsform der vorliegenden Erfindung ist es vorgesehen, dass der Sekundärbauteilpositionierer unmittelbar an der Primärbauteilanordnung angebracht wird. Beispielsweise handelt es sich bei der Primärbauteilanordnung um eine gewickelte Elektrodenanordnung, dessen Wickelkern mit dem Sekundärbauteilpositionierer verbunden wird. Es ist auch denkbar, dass ein Sekundärbauteilpositionierer verwendet wird, der in der gefertigten Energiespeicherzelle den Wickelkern zumindest teilweise bildet.

In einer weiteren Ausführungsform ist es vorgesehen, dass im dritten Verfahrensschritt der Sekundärbauteilpositionierer an einer für die Primärbauteilanordnung vorgesehenen Halterung ausgerichtet wird. Insbesondere wird der Sekundärbauteilpositionierer an die Halterung herangefahren und über Koppelelemente an diese gekoppelt. Mit Hilfe der Kopplung zwischen Sekundärbauteilanordnung und Halterung lässt sich auf einfache und unkomplizierte Weise sicherstellen, dass die Sekundärbauteilanordnung positionsfest in der gewünschten Position zur Primärbauteilanordnung angeordnet ist. Dabei ist der Sekundärbauteilpositionierer vorzugsweise derart ausgestaltet, dass er nach einem Schlüssel-Schloss-Prinzip mit einer Fertigungsstation, insbesondere der Halterung, verbunden werden kann, wodurch eine definierte und reproduzierbare Positionierung des Sekundärbauteils bzw. von bereits mit den Sekundärbauteilen verbundenen Teilen erreicht wird. Eine gesonderte Positionierungs- und Kontrolleinrichtung ist damit überflüssig. Insbesondere ist es vorgesehen, dass die Kopplung zwischen Halterung und Sekundärbauteilpositionierer derart stark ist, dass kein Versatz zwischen Halterung und Sekundärbauteilpositionierer im zweiten Verfahrensschritt erfolgt.

In einer weiteren Ausführungsform ist es vorgesehen, dass in einem vierten Verfahrensschritt
-- eine Primärbauteilanordnung von der Halterung aufgenommen wird und/oder
-- Primärbauteile in der Halterung zu einer Primärbauteilanordnung zusammengefügt werden. Insbesondere ist es vorgesehen, dass die Elektrodenanordnung von der Halterung aufgenommen wird und/oder die Elektroden in der Halterung bzw. einem Spannrahmen zu einer Elektrodenanordnung zusammengefügt werden. Dabei ist es vorzugsweise vorgesehen, dass zwischen den einzelnen Elektroden Separatoren angeordnet werden. Insbesondere ist es vorgesehen, dass der Spannrahmen zur Bildung der Elektrodenanordnung genutzt wird. Beispielsweise wird die Bildung der Elektrodenanordnung durch einen Rahmengerüst des Spannrahmens unterstützt. Es ist aber auch denkbar, dass eine bereits außerhalb des Spannrahmens gebildete Elektrodenanordnung oder ein Teil einer Elektrodenanordnung für die Verbindung mit den Ableitern in den Spannrahmen eingeführt bzw. platziert wird.

In einer weiteren Ausführungsform ist es vorgesehen, dass in einem fünften Verfahrensschritt mindestens zwei Primärbauteile der Primärbauteilanordnung relativ zueinander fixiert werden. Insbesondere ist es vorgesehen dass Fixierungsmittel, wie beispielsweise Klebestreifen, zur relativen Fixierung der Primärbauteile genutzt werden. Denkbar ist auch, dass alle Primärbauteile der Primärbauteilanordnung zueinander fixiert angeordnet sind, wobei die einzelnen Primärbauteile mit unterschiedlichen oder demselben Fixierungsmittel fixiert werden. Vorzugsweise werden die Primärbauteile an mehreren Stellen relativ zueinander fixiert. Dadurch wird in vorteilhafter Weise neben der fixierten geometrischen Anordnung der Sekundärbauteile zueinander auch eine fixierte geometrische Anordnung der Primärbauteile sichergestellt, was das reproduzierbare Anordnen der Sekundärbauteilanordnung zur Primärbauteilanordnung in vorteilhafter Weise erleichtert und damit verbessert.

In einer weiteren Ausführungsform ist es vorgesehen, dass mindestens eines der Sekundärbauteile der Sekundärbauteilanordnung für die Verbindung im zweiten Verfahrensschritt zumindest teilweise deckungsgleich zu einem Teil einer der Primärbauteile der Primärbauteilanordnung angeordnet wird. Durch ein flächiges Verbinden von überlappenden Bereichen der Sekundärbauteile und des jeweiligen Primärbauteils lässt sich in vorteilhafter Weise eine besonders stabile Befestigung des Sekundärbauteils an dem Primärbauteil bewirken.

In einer weiteren Ausführungsform ist es vorgesehen, dass im zweiten Verfahrensschritt die Sekundärbauteile mit der Primärbauteilanordnung durch ein Schweißverfahren, vorzugsweise durch ein Ultraschallschweißverfahren, verbunden werden. Insbesondere ist es vorgesehen, dass mindestens eine Elektrode in der Funktion als Primärbauteil eine Ableitfahne aufweist, die für das Verbinden mit einem Ableiter in der Funktion als Sekundärbauteil entlang mindestens einer Richtung zumindest teilweise deckungsgleich angeordnet wird. Durch das Verschweißen wird eine besonders stabile und dauerhafte Verbindung zwischen der Primärbauteilanordnung, insbesondere der Elektrodenanordnung, und der Sekundärbauteilanordnung, insbesondere der Ableiteranordnung, realisiert. Dabei ist es vorzugsweise vorgesehen, dass jedes einzelne Sekundärbauteil mit dem für ihn vorgesehenen Primärbauteil, insbesondere mit der für ihn vorgesehenen Elektrode, verschweißt wird.

In einer weiteren Ausführungsform ist es vorgesehen, dass in einem sechsten Verfahrensschritt die am Sekundärbauteilpositionierer montierte Primärbauteilanordnung durch eine Bewegung des Sekundärbauteilpositionierers mittransportiert wird. Insbesondere ist es dazu vorgesehen, dass der Sekundärbauteilpositionierer Bindungselemente aufweist, über die der Sekundärbauteilpositionierer an ein Transportsystem gebunden wird. Insbesondere lässt sich dann die Primärbauteilanordnung transportieren, ohne dass sie kontaktiert wird, wodurch die Wahrscheinlichkeit für Transportschäden in besonders vorteilhafter Weise gesenkt wird. Denkbar ist beispielsweise auch, dass das Transportsystem den Sekundärbauteilpositionierer zur Primärbauteilanordnung befördert und nach der Realisierung der Verbindung zum nächsten Fertigungsschritt im Herstellungsprozess des Energiespeichers weiterbefördert wird. Beispielsweise ist das Transportsystem in eine Fertigungsstraße zur Herstellung von Energiespeichern integriert.

In einer weiteren Ausführungsform ist es vorgesehen, dass in einem siebten Verfahrensschritt der Sekundärbauteilpositionierer mit der Primärbauteilanordnung zumindest teilweise verbaut oder von der Primärbauteilanordnung wieder getrennt wird. Dabei ist es auch denkbar, dass die Primärbauteilanordnung noch vom Sekundärbauteilpositionierer in ein Gehäuse für den Energiespeicher transportiert und dann von diesem wieder gelöst wird. Insbesondere ist es vorgesehen, dass der Sekundärbauteilpositionierer die Energiespeicherzelle in ihrem noch nicht fertiggestellten Zustand zwischen zwei Arbeitspositionen wiederholt transportiert, wobei die jeweilige Arbeitsposition für die Fertigung eines einzelnen Fertigungsschrittes verantwortlich ist. In vorteilhafter Weise lässt sich der gelöste Sekundärbauteilpositionierer erneut wieder mit Sekundärbauteilen bestücken und zur erneuten Befestigung einer anderen Sekundärbauteilanordnung an einer andere Primärbauteilnanordnung oder der Primärbauteilanordnung nutzen. Es ist aber auch vorstellbar, dass der Sekundärbauteilpositionierer dauerhaftes Bauteil der gefertigten Energiespeicherzelle wird. Der Sekundärbauteilpositionierer könnte dann beispielweise auch als Gehäuseteil, insbesondere als Deckel, dienen. Vorzugsweise handelt es sich bei der herzustellenden Energiespeicherzelle um eine prismatische Zelle.

In einer weiteren Ausführungsform ist es vorgesehen, dass in einem achten Verfahrensschritt aus der Primärbauteilanordnung und/oder dem Sekundärbauteilpositionierer ein Energiespeicher, vorzugsweise eine Pouchzelle, gefertigt wird. Dabei ist es vorstellbar, dass die Primärbauteilanordnung verpresst und anschließend in ein Gehäuse oder eine Verkleidung integriert wird.

In einer weiteren Ausführungsform ist es vorgesehen, dass der Ableiterpositionierer beim Verbauen der Primärbauteilanordnung zur Ausrichtung und/oder Befestigung an einem Gehäuse genutzt wird. Vorzugsweise handelt es sich bei dem Gehäuse bzw. bei der Verkleidung um einen Teil eines zu fertigenden Energiespeichers. Insbesondere ist es vorgesehen, dass ein, vorzugsweiser stegförmiger, Sekundärbauteilpositionierer auf der Höhe einer Siegelnaht in einer Pouchzelle angeordnet wird. Dadurch lässt sich in vorteilhafter Weise das Verschließen der Pouchzelle erleichtern, da die Siegelnaht keinen Höhenunterschied aufweist.

In einer weiteren Ausführungsform ist es vorgesehen, dass ein zumindest teileweise aus einem nichtleitenden Material gefertigter Sekundärbauteilpositionierer verwendet wird. Insbesondere ist der Sekundärbauteilpositionierer zumindest teilweise aus einem Kunststoff gefertigt, der beim Siegelvorgang aufgeschmolzen wird und so ein dichtes Verschließen der Pouchzelle in vorteilhafter Weise unterstützt.

In einer weiteren Ausführungsform ist es vorgesehen, dass der Sekundärbauteilpositionierer zum Transport der, vorzugsweise unmittelbar mit dem Sekundärbauteilpositionierer verbundenen, Primärbauteilanordnung zwischen zwei Fertigungsposten im Fertigungsverfahren zur Herstellung der Energiespeicherzelle verwendet wird. Insbesondere lässt sich der Sekundärbauteilpositionierer für den Transport zwischen den zwei jeweiligen Fertigungsposten und für die Positionierung am jeweiligen Fertigungsposten nutzen. Vorzugsweise wiederholt der Ableiterpositionierer den Transport und die Positionierung der Primärbauteilanordnung für unterschiedliche Primärbauteilanordnungen. Dadurch kann die positionsgenaue Anordnung der Primärbauteile bzw. der Sekundärbauteil zueinander bzw. untereinander in vorteilhafter Weise über mehrere Fertigungsschritte im Herstellungsverfahren der Energiespeicherzelle erhalten bleiben.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt einen Sekundärbauteilpositionierer für Verfahren zum Befestigen von Sekundärbauteile an einer Primärbauteilanordnung gemäß einer ersten beispielhaften Ausführungsform der vorliegenden Erfindung.

Die **Figuren 2a****-g** zeigen ein Verfahren zum Befestigen von Sekundärbauteile an einer Primärbauteilnanordnung gemäß einer zweiten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

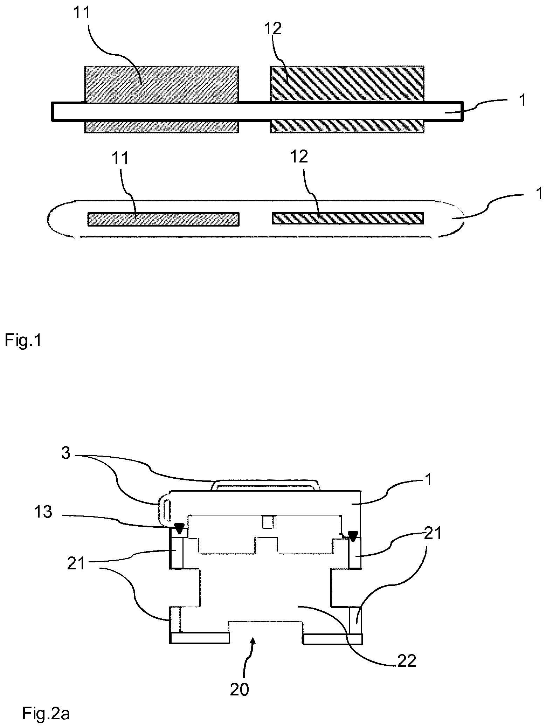

In **Figur 1** ist schematisch ein Sekundärbauteilpositionierer 1 für ein Verfahren zur Befestigen von Sekundärbauteilen 11,12 an einer Primärbauteilanordnung 4 gemäß einer ersten beispielhaften Ausführungsform der vorliegenden Erfindung dargestellt. Das Befestigen bzw. die Montage von Sekundärbauteilen an der Primärbauteilanordnung 4 ist insbesondere ein Fertigungsschritt, der für die Ausbildung eines die Primärbauteilanordnung 4 umfassenden Energiespeichers erforderlich ist. Gemäß der Erfindung handelt es sich bei der Primärbauteilanordnung um eine Elektrodenanordnung und bei den Sekundärbauteilen um Ableiter. Bei dem dann gefertigten Energiespeicher kann es sich beispielsweise um eine Batterie, insbesondere einen Supercap, einen Lithium-Ionen-Akku bzw. bevorzugt um eine Pouchzelle handeln. Dabei ist es vorgesehen, dass die Ableiter 11,12, vorzugsweise als Ableiterbleche, mit der Elektrodenanordnung 4 verbunden werden, damit die Elektrodenanordnung 4 über diese Ableiter 11,12 in Kontakt mit einem übergeordneten System gebracht und insbesondere entladen und geladen werden kann. Für die weitere Verarbeitung, insbesondere bei Pouchzellen, ist eine konstante Anordnung der Ableiter 11,12 untereinander und zur Elektrodenanordnung 4 von entscheidender Bedeutung. Die Qualität des später gefertigten Energiespeichers hängt zudem von der Stäke der Verbindung zwischen dem Ableiter 11,12 bzw. dem Ableiterblech und der Elektrode ab. Dabei lässt sich die Stärke der Verbindung durch reproduzierbare Rahmenbedingungen, wie beispielsweise eine gleichbleibende geometrische Anordnung, beim Verbinden positiv beeinflussen. Der Stand der Technik kennt zum Sicherstellen einer konstanten Anordnung beim Herstellen von Verbindung zwischen Ableiteranordnung 5 und Elektrodenanordnung 4 aufwendige Positionierungssysteme. Es ist Aufgabe der vorliegenden Erfindung, ein Verfahren zur Verfügung zu stellen, mit dem eine hochwertige Verbindung zwischen dem Ableiter, insbesondere dem Ableiterblech, und der jeweiligen Elektrode in der Elektrodenanordnung 4 realisiert wird, ohne auf aufwendige Positionierungssystem zurückgreifen zu müssen.

Es ist vorgesehen, dass die Ableiter 11,12 in einem ersten Verfahrensschritt - bevor sie mit der Elektrodenanordnung 4 verbunden werden - zunächst mittels eines Ableiterpositionierers 1 zur Bildung einer Ableiteranordnung 5 relativ zueinander angeordnet werden. Dabei werden die Ableiter 11,12 vorzugsweise in passgenauen Aussparungen im Ableiterpositionierers 1 platziert, wodurch sie positionsfest zueinander angeordnet werden. Insbesondere sind die Aussparungen an die geometrische Form des jeweiligen Ableiters 11 angepasst und unterbinden die Bewegung des Ableiters 11 in mindestens eine Richtung, vorzugsweise im mehrere Richtungen. Zudem ist es denkbar, dass die Aussparungen im Ableiterpositionierer 1 derart ausgestaltet sind, dass die Ableiter 11,12 durch die Lage und Position der Aussparungen für die später erfolgende Verbindung mit der Primärbauteilnanordnung 4 ausgerichtet werden. In Figur 1 ist ein als Steg ausgeformter Ableiterpositionierer 1 mit zwei Aussparungen dargestellt, in denen jeweils ein Ableiter 11,12 angeordnet ist. In der in Figur 1 unten dargestellten Draufsicht erkennt man, dass der Ableiterpositionierer 1 die eingesetzten Ableiter 11,12 umschließt und so eine relative Bewegung der Ableiter 11,12 in mindestens zwei nicht parallel zueinander verlaufende Richtungen unterbindet. Diese Einschränkung der Bewegungsfreiheit des jeweiligen Ableiters 11,12 erlaubt es, die Ableiter 11,12 in der gewünschten konstanten relativen Anordnung zueinander zumindest teilweise zu fixieren. In der in der Figur 1 oben dargestellten Seitenansicht ist zu erkennen, dass die Ableiter 11,12 durch den Ableiterpositionierer 1 hindurchgreifen. Vorzugsweise sind die Ableiter 11,12 entlang einer Richtung, entlang der sie durch den Ableiterpositionierer 1 durchgreifen, beweglich angeordnet. Dadurch ist es gemäß der Erfindung, möglich nach dem Verbinden der Ableiteranordnung 5 im zweiten Verfahrensschritt mit der Elektrodenanordnung 4 den Ableiterpositionierer 1 durch eine einfache Abziehbewegung wieder von den dann befestigten Ableitern 11,12 abzuziehen.

Die in Figur 1 dargestellten Aussparungen im Steg sind derart ausgestaltet, dass die Ableiter 11,12 im Wesentlichen parallel zueinander verlaufen bzw. ausgerichtet sind. Denkbar ist auch, dass die Aussparungen im Ableiterpositionierer 1 derart gestaltet sind, dass die in den Ableiterpositionierer 1 eingesetzten Ableiter 11,12 schräg zueinander angeordnet sind, beispielsweise in Richtung der Elektrodenanordnung 4 auseinander- oder aufeinander zulaufen. Weiterhin ist es denkbar, dass der jeweilige Ableiter 11,12 und der Ableiterpositionierer 1 derart ausgestaltet sind, dass die Ableiter 11,12 unterschiedlich weit aus dem Ableiterpositionierer 1 herausragen und beispielsweise so an einen Versatz von einzelnen Elektroden in der Elektrodenanordnung 4 angepasst sind.

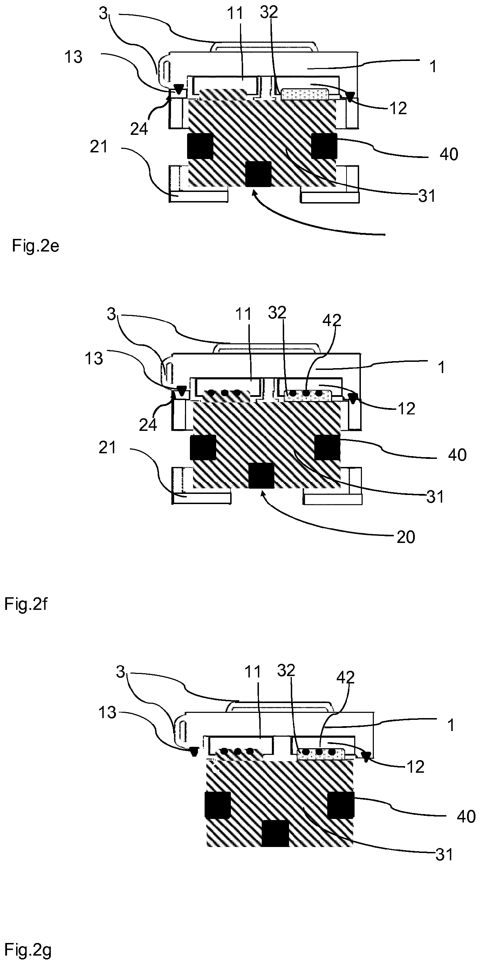

In den **Figuren 2a bis 2g** ist schematisch ein Verfahren zum Befestigen von Ableitern 11,12 an einer Elektrodenanordnung 4 gemäß einer zweiten beispielhaften Ausführungsform der vorliegenden Erfindung dargestellt. Hier ist eine Halterung 20 vorgesehen, auf dem die Elektrodenanordnung 4 für die Verbindung mit der Ableiteranordnung 5 auf einer Auflagefläche 22 platziert wird. Insbesondere ist es vorgesehen, dass die Auflagefläche 22 zumindest teilweise von einem Rahmengerüst 21 begrenzt wird, wobei das Rahmengerüst 21 zur Seite des Ableiterpositionierers 1 unterbrochen ist.

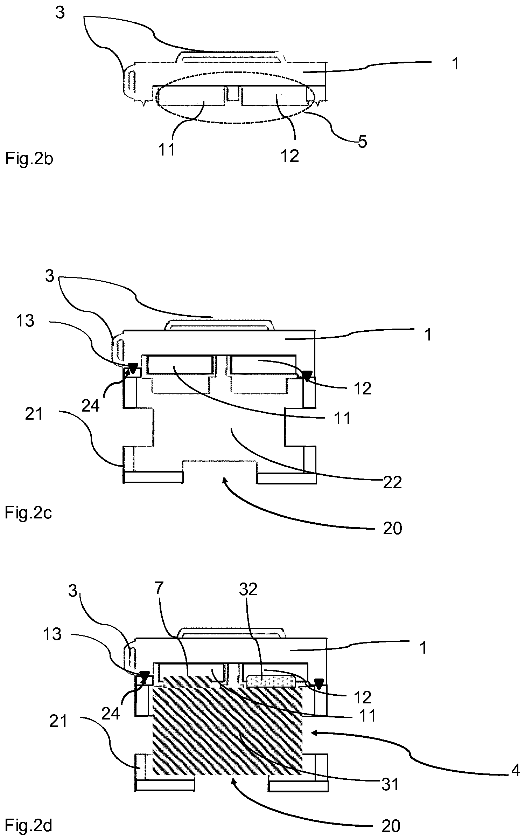

Dabei ist für die Verwendung einer solchen Halterung 20 beim Befestigen der Ableiter 11,12 an der Elektrodenanordnung 4 ein Ableiterpositionierer 1 vorgesehen, der entlang mindestens einer Seite benachbart zueinander Aussparungen für die jeweilige Aufnahme eines Ableiters 11 aufweist. Insbesondere ist es vorgesehen, dass der Ableiterpositionierer 1 relativ zur Halterung 20 bewegbar ist. Zum Ankoppeln des Ableiterpositionierers 1 an die Halterung 20 weist die Halterung 20 Koppelelemente 13 auf, mit denen der Sekundärbauteilpositionierer 1 starr bzw. positionsfest zur Halterung 20 angeordnet wird. Zur Aufnahme der Ableiter 11,12 bzw. der Ableiterbleche ist es vorgesehen, dass der Ableiterpositionierer 1 von der Halterung 20 entkoppelt wird und ein Ableiter 11 und ein weiterer Ableiter 12 in den jeweils dafür vorgesehenen Aussparung aufgenommen und darin befestigt werden, wie es in Figur 2b gezeigt ist. Es ist dabei denkbar, dass bei einem solchen Bestücken des Ableiterpositionierers 1 mit den Ableitern 11,12 eine lösbare oder eine nichtlösbare Verknüpfung realisiert wird. Im Anschluss an das Bestücken des Ableiterpositionierers 1 wird dieser wieder an die Halterung 20 gekoppelt, wie es Figur 2c illustriert. Dazu wird der Sekundärbauteilpositionierer 1 mit der Halterung 20 zusammengesteckt und über die Koppelelemente 13 miteinander verknüpft. Die Halterung 20 und der Ableiterpositionierer 1 sind dabei vorzugsweise derart komplementär ausgestaltet, dass der Ableiterpositionierer 1 stets in derselben Stellung zur Halterung 20 angekoppelt wird, wodurch in vorteilhafter Weise die Ausrichtung der Ableiteranordnung 5 zur Elektrodenanordnung 4 reproduzierbar wird, was schließlich zu einer Qualitätsverbesserung der Verbindung der einzelnen Ableiter mit der jeweiligen Elektrode führt. Insbesondere werden durch das Ankoppeln des Ableiterpositionierers 1 an die Halterung 20 die Ableiter 11,12 für die spätere Verbindung möglichst genau ausgerichtet. Weiterhin sind am Ableiterpositionierer 1 Bindungselemente 3 angeordnet, mit denen der Ableiterpositionierer 1 an ein Transportsystem gebunden und über dieses bewegt werden kann.

Es ist dabei weiterhin vorgesehen, dass in der Halterung 20 zur Bildung der Elektrodenanordnung 4 einzelne Elektroden 31,32, vorzugsweise Elektodenblätter, auf der Auflagefläche 22 stapelartig übereinander angeordnet werden. Neben dem Stapeln der Elektroden 31,32 entlang einer Stapelrichtung ist es auch denkbar, dass die Elektroden 31,32 für die Bildung der Elektrodenanordnung 4 gewickelt werden. Es ist auch denkbar, dass eine außerhalb des Stapelrahmens 20 zusammengefügte Elektrodenanordnung 4 in den Stapelrahmen 20 eingefügt wird, um ihn mit der Ableiteranordnung 5 zu verbinden. Vorzugsweise werden die einzelnen Elektroden 31,32 bei der Bildung der Elektrodenanordnung 4 durch Separatoren voneinander getrennt. Insbesondere ist es vorgesehen, dass eine Elektrode 31 mit einer Ableitfahne 7 derart an der Halterung 20 angeordnet wird, dass sie entlang einer parallel zur Stapelrichtung verlaufenden Richtung zumindest teilweise deckungsgleich zu einem der Ableiter 11 angeordnet wird. Es ist weiterhin denkbar, dass eine Mehrzahl von Elektroden 31,32 mit Ableitfahnen 7 in der Halterung 20 zur Bildung der Elektrodenanordnung 4 angeordnet sind und dass der Ableiterpositionierer 1 derart gestaltet ist, dass die eingesetzten Ableiter 11,12 zueinander höhenversetzt angeordnet sind, um den Höhenversatz durch das Stapeln der Elektroden 31,32 zu kompensieren. In Figur 2d ist beispielsweise eine Elektrode 31 mit einer Ableiterfahne oberhalb einer weiteren Elektrode 32 mit einer weiteren Ableiterfahne im der Halterung 20 gestapelt, wobei die Ableiterfahne in Stapelrichtung deckungsgleich zu dem Ableiter im Ableiterpositionierer 1 und die weitere Ableiterfahne in Stapelrichtung deckungsgleich zum weiteren Ableiter 12 im Ableiterpositionierer 1 angeordnet ist.

Es ist dabei weiterhin vorgesehen, dass die einzelnen Elektroden 31,32 vor dem Verbinden der Elektrodenanordnung 4 mit der Ableiteranordnung 5 durch ein Fixierungsmittel 40 zueinander fixiert werden, um ein Verrutschen der einzelnen Elektroden 31,32 in der Elektrodenanordnung 4 zu verhindern. Dies ist in Figur 2e dargestellt. Insbesondere werden die Elektroden 31, 32 mittels eines Klebestreifens an einer Seite der Elektrodenanordnung 4 fixiert, um das Verrutschen zu vermeiden. Vorzugsweise werden an jeder Seite (bis auf die Seite, an die der Ableiterpositionierer 1 an den Halterung 20 gekoppelt wird) der Elektrodenanordnung Fixierungsmittel, insbesondere Klebestreifen, angeordnet.

Es ist dabei weiterhin vorgesehen, dass die vorfixierten Elektroden 31,32 eine Elektrodenanordnung 4 bildet, die mit der entsprechenden Ableiteranordnung im Ableiterpositionierer durch ein Ultraschallschweißverfahren fest bzw. dauerhaft verbunden wird. Es ist dabei vorzugsweise vorgesehen, dass die einzelnen Ableiter 11,12 jeweils mit einer Ableiterfahne 7 einer Elektrode verbunden werden. In Figur 2e sind die durch das Ultraschallschweißen verursachten Schweißnähte 42 zu erkennen.

Es ist dabei weiterhin vorgesehen, dass die mit dem Ableiterpositionierer 1 verbundene Elektrodenanordnung 4 über das mit dem Ableiterpositionierer 1 verbundene Transportsystem aus der Halterung 20 gelöst und zum nächsten Verarbeitungsschritt weitertransportiert wird. Figur 2f zeigt die Elektrodenanordnung 4, die über die Ableiter 11,12 mit dem Ableiterpositionierer 1 fest verbunden ist. Durch eine vom Transportsystem gesteuerte bzw. kontrollierte Bewegung lässt sich dann der Ableiterpositionierer 1 und damit auch die Elektrodenanordnung 4 weitertransportieren. Weiterhin ist es denkbar, dass der Ableiterpositionierer 1 zu einem späteren Zeitpunkt von den Ableitern 11,12 wieder gelöst oder mit dem Elektrodenanordnung 4 beispielsweise in ein Gehäuse bzw. in eine Verkleidung verbaut wird. Dabei ist es insbesondere vorgesehen, dass der Ableiterpositionierer 1 und/oder das Koppelelement das Ausrichten der Elektrodenanordnung 4 im Gehäuse unterstützt und/oder mit einem Teil des Gehäuses bzw. der Verkleidung verbunden wird.

### Bezugszeichenliste

- 1: Ableiterpositionierer
- 3: Bindungselement
- 4: Elektrodenanordnung
- 5: Ableiteranordnung
- 7: Ableitfahne
- 11: Ableiter
- 12: Weiterer Ableiter
- 13: Koppelelemente
- 20: Halterung
- 21: Rahmengerüst
- 22: Auflagefläche
- 31: Elektrode
- 32: Weitere Elektrode
- 40: Fixierungsmittel
- 42: Schweißnaht

## Patentansprüche

1. Verfahren zum Befestigen von Ableitern (11,12) an einer Elektrodenanordnung (4) beim Herstellen einer Energiespeicherzelle, **dadurch gekennzeichnet, dass** in einem ersten Verfahrensschritt zur Bildung einer Ableiteranordnung (5) die Ableiter (11,12) mittels eines Ableiterpositionierers (1) positionsfest zueinander angeordnet werden, wobei die Ableiter lösbar am Ableiterpositionierer (1) angebracht werden, und in einem zweiten Verfahrensschritt die Ableiteranordnung (5) mit der Elektrodenanordnung (4) dauerhaft verbunden wird und nach dem Verbinden der Ableiterpositionierer (1) von den Ableitern (11, 12) abgezogen wird.

2. Verfahren gemäß einem der vorhergehenden Ansprüche, wobei in einem dritten Verfahrensschritt die Ableiteranordnung (5) für das Verbinden im zweiten Verfahrensschritt relativ zur Elektrodenanordnung (4) positionsfest angeordnet wird.

3. Verfahren gemäß einem der vorhergehenden Ansprüche, wobei der Ableiterpositionierer (1) unmittelbar an der Elektrodenanordnung (4) angebracht wird.

4. Verfahren gemäß einem der vorhergehenden Ansprüche, wobei im dritten Verfahrensschritt der Ableiterpositionierer (1) an einer für die Primärbauteilanordnung (4) vorgesehenen Halterung (20) ausgerichtet wird.

5. Verfahren gemäß Anspruch 4, wobei in einem vierten Verfahrensschritt
-- eine Elektrodenanordnung (4) von der Halterung (20) aufgenommen wird und/oder
-- Elektroden (31,32) in der Halterung (20) zu einer Elektrodenanordnung (4) zusammengefügt werden.

6. Verfahren gemäß einem der vorhergehenden Ansprüche, wobei in einem fünften Verfahrensschritt mindestens zwei Elektroden (31,32) der Elektrodenanordnung (4) relativ zueinander fixiert werden.

7. Verfahren gemäß einem der vorhergehenden Ansprüche, wobei mindestens eines der Ableiter (11,12) der Ableiteranordnung (5) für die Verbindung im zweiten Verfahrensschritt zumindest teilweise deckungsgleich zu einem Teil der Elektroden (31,32) der Elektrodenanordnung (4) angeordnet wird.

8. Verfahren gemäß einem der vorhergehenden Ansprüche, wobei im zweiten Verfahrensschritt die Ableiter (11,12) mit der Elektrodenanordnung (4) durch ein Schweißverfahren, vorzugsweise durch ein Ultraschallschweißverfahren, verbunden werden.

9. Verfahren gemäß einem der vorhergehenden Ansprüche, wobei in einem sechsten Verfahrensschritt die am Ableiterpositionierer (1) montierte Elektrodenanordnung (4) durch eine Bewegung des Ableiterpositionierers (1) mittransportiert wird.

10. Verfahren gemäß einem der vorhergehenden Ansprüche, wobei in einem siebten Verfahrensschritt der Ableiterpositionierer (1) mit der Elektrodenanordnung (4) zumindest teilweise verbaut oder von der Elektrodenanordnung (4) wieder getrennt wird.

11. Verfahren gemäß einem der vorhergehenden Ansprüche, wobei in einem achten Verfahrensschritt aus der Elektrodenanordnung (4) und/oder dem Ableiterpositionierer (1) ein Energiespeicher, vorzugsweise eine Pouchzelle, gefertigt wird und/oder wobei ein zumindest teilweise aus einem nichtleitenden Material gefertigter Ableiterpositionierer (1) verwendet wird.

12. Verfahren gemäß Anspruch 10 oder 11, wobei der Ableiterpositionierer (1) beim Verbauen der Elektrodenanordnung (4) zur Ausrichtung und Befestigung an einem Gehäuse oder zur Verkleidung genutzt wird.

13. Verfahren gemäß einem der vorhergehenden Ansprüche, wobei der Ableiterpositionierer (1) zum Transport der Elektrodenanordnung (4) zwischen zwei Fertigungsposten beim Herstellen der Energiespeicherzelle verwendet wird.

## Claims

1. Method for fastening arresters (11, 12) to an electrode arrangement (4) during the production of an energy storage cell, **characterized in that**, in a first method step, to form an arrester arrangement (5), the arresters (11, 12) are arranged fixedly positioned with respect to one another by way of an arrester positioner (1), wherein the arresters are attached releasably to the arrester positioner (1), and, in a second method step, the arrester arrangement (5) is durably connected to the electrode arrangement (4) and, following the connection, the arrester positioner (1) is removed from the arresters (11, 12).

2. Method according to one of the preceding claims, wherein, in a third method step, the arrester arrangement (5) for the connection in the second method step is arranged fixedly positioned relative to the electrode arrangement (4).

3. Method according to either of the preceding claims, wherein the arrester positioner (1) is attached directly to the electrode arrangement (4).

4. Method according to one of the preceding claims, wherein, in the third method step, the arrester positioner (1) is aligned with a holder (20) provided for the primary component arrangement (4).

5. Method according to Claim 4, wherein, in a fourth method step,
-- an electrode arrangement (4) is received by the holder (20), and/or
-- electrodes (31, 32) are joined together in the holder (20) to form an electrode arrangement (4).

6. Method according to one of the preceding claims, wherein, in a fifth method step, at least two electrodes (31, 32) of the electrode arrangement (4) are fixed relative to one another.

7. Method according to one of the preceding claims, wherein at least one of the arresters (11, 12) of the arrester arrangement (5), for the connection in the second method step, is arranged at least partly congruently with respect to some of the electrodes (31, 32) of the electrode arrangement (4).

8. Method according to one of the preceding claims, wherein, in the second method step, the arresters (11, 12) are connected to the electrode arrangement (4) using a welding method, preferably using an ultrasonic welding method.

9. Method according to one of the preceding claims, wherein, in a sixth method step, the electrode arrangement (4) mounted on the arrester positioner (1) is jointly transported by way of a movement of the arrester positioner (1).

10. Method according to one of the preceding claims, wherein, in a seventh method step, the arrester positioner (1) is installed at least partly with the electrode arrangement (4) or is separated again from the electrode arrangement (4).

11. Method according to one of the preceding claims, wherein, in an eighth method step, an energy store, preferably a pouch cell, is manufactured from the electrode arrangement (4) and/or the arrester positioner (1), and/or wherein an arrester positioner (1) manufactured at least partly from a nonconductive material is used.

12. Method according to Claim 10 or 11, wherein the arrester positioner (1), when the electrode arrangement (4) is installed, is used for alignment and fastening to a housing or for cladding purposes.

13. Method according to one of the preceding claims, wherein the arrester positioner (1) is used to transport the electrode arrangement (4) between two manufacturing stations during the production of the energy storage cell.

## Revendications

1. Procédé de fixation de conducteurs (11, 12) sur un ensemble d'électrodes (4) dans la fabrication d'une cellule d'accumulation d'énergie,
**caractérisé en ce que**, dans une première étape de procédé destinée à former un ensemble de conducteurs (5), les conducteurs (11, 12) sont disposés l'un par rapport à l'autre en position fixe au moyen d'un dispositif de positionnement de conducteurs (1), dans lequel les conducteurs sont montés de manière amovible sur le dispositif de positionnement de conducteur (1) et, dans une deuxième étape de procédé, l'ensemble de conducteurs (5) est raccordé à demeure à l'ensemble d'électrodes (4) et est retiré des conducteurs (11, 12) après que le dispositif de positionnement de conducteur (1) a été raccordé.

2. Procédé selon l'une des revendications précédentes, dans lequel, dans une troisième étape de procédé, l'ensemble de conducteurs (5) est disposé dans une position fixe par rapport à l'ensemble d'électrodes (4) pour le raccordement dans la deuxième étape de procédé.

3. Procédé selon l'une des revendications précédentes, dans lequel le dispositif de positionnement de conducteur (1) est directement fixé à l'ensemble d'électrodes (4).

4. Procédé selon l'une des revendications précédentes, dans lequel, dans la troisième étape de procédé, le dispositif de positionnement de conducteur (1) est aligné avec un support (20) prévu pour l'ensemble de composants primaires (4).

5. Procédé selon la revendication 4, dans lequel, dans une quatrième étape de procédé,
- un ensemble d'électrodes (4) est reçu par le support (20) et/ou
- des électrodes (31, 32) sont réunies dans le support (20) pour former un ensemble d'électrodes (4).

6. Procédé selon l'une des revendications précédentes, dans lequel, dans une cinquième étape de procédé, au moins deux électrodes (31, 32) de l'ensemble d'électrodes (4) sont fixées l'une par rapport à l'autre.

7. Procédé selon l'une des revendications précédentes, dans lequel, pour le raccordement effectué dans la deuxième étape de procédé, au moins l'un des conducteurs (11, 12) de l'ensemble de conducteurs (5) est disposé de manière à être au moins partiellement en superposition avec une partie des électrodes (31, 32) de l'ensemble d'électrodes (4).

8. Procédé selon l'une des revendications précédentes, dans lequel, dans la deuxième étape de procédé, les conducteurs (11, 12) sont raccordés à l'ensemble d'électrodes (4) par un procédé de soudage, de préférence par soudage par ultrasons.

9. Procédé selon l'une des revendications précédentes, dans lequel, dans une sixième étape de procédé, l'ensemble d'électrodes (4) monté sur le dispositif de positionnement de conducteur (1) est transporté en association avec le dispositif de positionnement de conducteur (1) par un mouvement de ce dernier.

10. Procédé selon l'une des revendications précédentes, dans lequel, dans une septième étape de procédé, le dispositif de positionnement de conducteur (1) est au moins partiellement monté avec l'ensemble d'électrodes (4) ou est de nouveau séparé de l'ensemble d'électrodes (4).

11. Procédé selon l'une des revendications précédentes, dans lequel, dans une huitième étape de procédé, un accumulateur d'énergie, de préférence une cellule de type étui, est réalisé à partir de l'ensemble d'électrodes (4) et/ou du dispositif de positionnement de conducteur (1) et/ou dans lequel on utilise un dispositif de positionnement de conducteur (1) constitué au moins partiellement d'un matériau non conducteur.

12. Procédé selon la revendication 10 ou 11, dans lequel le dispositif de positionnement de conducteur (1) est utilisé lors du montage de l'ensemble d'électrodes (4) pour l'alignement et la fixation sur un boîtier ou pour la réalisation d'un gainage.

13. Procédé selon l'une des revendications précédentes, dans lequel le dispositif de positionnement de conducteur (1) est utilisé pour le transporter de l'ensemble d'électrodes (4) entre deux postes de fabrication lors de la fabrication de la cellule d'accumulation d'énergie.
